# EUROPEAN PATENT SPECIFICATION

(11) **EP 4 353 554 B1**
(45) Date of publication and mention of the grant of the patent: **02.12.2026**
(21) Application number: 22824210.3
(22) Date of filing: 14.06.2022
(51) Int. Cl.: B60W 20/00, B60K 35/28, B60W 50/14

(54) **ALL-TERRAIN CONTROL METHOD AND APPARATUS, STORAGE MEDIUM, AND VEHICLE**
GELÄNDESTEUERUNGSVERFAHREN UND -VORRICHTUNG, SPEICHERMEDIUM UND FAHRZEUG
PROCÉDÉ ET APPAREIL DE COMMANDE TOUT-TERRAIN, SUPPORT DE STOCKAGE ET VÉHICULE

(30) Priority: 17.06.2021 CN 202110674891
(43) Date of publication of application: 17.04.2024
(73) Proprietor: Great Wall Motor Company Limited, Baoding, Hebei 071000 (CN)
(72) Inventor: REN, Dongxu, Baoding, Hebei 071000 (CN)
(74) Representative: Klunker IP Patentanwälte PartG mbB
(86) International application number: PCT/CN2022/098730
(87) International publication number: WO 2022/262731

(56) References cited:
- EP-A1- 3 492 328
- CN-A- 107 128 309
- CN-A- 107 544 318
- CN-A- 108 382 387
- CN-A- 110 027 562
- CN-A- 110 789 527
- CN-A- 111 376 744
- CN-A- 114 763 130
- TW-A- 201 000 339
- US-A1- 2011 166 733
- US-A1- 2015 198 235
- US-A1- 2019 232 941

## Description

### TECHNICAL FIELD

The present invention relates to the technical field of vehicles, and particularly relates to an all-terrain controlling method and apparatus, a storage medium and a vehicle.

### BACKGROUND

With the development in economy, science and technology, cars are no longer merely a transportation tool for people, but are popular products that integrate leading-edge technologies. In order to bring the users better joy in driving and technological experience, the all-terrain controlling system (All Terrain System, ATS) developed based on various scenes emerges accordingly.

The ATS system is an electronic control system of cars. When driving a car equipped with the all-terrain controlling system, the driver can select the corresponding terrain mode according to the practical terrain situation where the car is driving, for example, snowfield, sandy ground and muddy ground, so that the subsystems of the car enter the operation modes corresponding to the terrain mode, whereby the subsystems can improve the stability and the safety of the car in the terrain situation to the largest extent.

Currently, the ATS system is mainly applied to fuel powered vehicles and electric-only vehicle models. Although in the market some hybrid-electric vehicle models are provided with the ATS system, for example, the snowfield mode, the muddy-ground mode and the sandy-ground mode, because in the early stage the software architectures mainly focus in the interaction between the ATS system and the electronic steering assisting system, they cannot be compatible with hybrid-electric vehicle models of various architectures. As a result, when the hybrid-electric vehicle models are to carry the conventional ATS, the software requires to be re-designed, which results in unnecessary waste in the resource and the cost, and is adverse to the quick iteration of the software.

EP 3 492 328 A1 discloses a hybrid electric vehicle comprising an engine and at least one electric propulsion motor, the vehicle being operable in a hybrid electric vehicle (HEV) mode in which the engine may be switched on automatically during a drive-cycle by control means and an electric vehicle (EV)-only mode in which engine starting is inhibited during a drive-cycle, the vehicle being operable in one of a plurality of attribute modes in which one or more operating parameters of the vehicle are changed by the control means responsive to the identity of the selected attribute mode, the attribute modes including a first attribute mode and a second or further attribute mode comprising at least one terrain response mode, wherein the vehicle is operable by the driver to assume an automatic attribute mode selection mode in which the vehicle is configured automatically to determine which attribute mode to select, wherein when the vehicle is in the automatic attribute mode selection mode and the first attribute mode is selected, selection of the EV-only mode by the driver results in assumption of the EV-only mode and continued operation in the first attribute mode, and when the vehicle is in the automatic attribute mode selection mode and a terrain response mode has been selected, selection of the EV-only mode by the driver is refused and results in continued operation in the terrain response mode.

CN 110 027 562 A a control method of a vehicle used in a vehicle control device, comprising: determining a driver's driving style based on a comparison of historical driving data of the vehicle and predicted driving data and a driver style profile; determining the applicable driving mode based on the identified driving style and the correlation between the predicted driving style and the applicable driving mode; and configuring the parameters of the applicable driving mode for the vehicle.

### SUMMARY

It is an object of the present invention to solve the problem that the conventional ATS system cannot be compatible with hybrid-electric vehicle models of various architectures.

The above problems are solved by the features of the independent claims. Further embodiments are defined in the dependent claims.

As compared with the prior art, the present invention has the following advantages:

In the present invnetion, the all-terrain mode that the vehicle is in and the driving mode are monitored in real time, and by using the correspondence relation between the driving modes and the all-terrain modes of the vehicle, closed-loop control is performed to the driving mode of the vehicle and the all-terrain mode that the vehicle is in. When the all-terrain mode of the vehicle changes, the driving mode of the vehicle automatically responds to the changing of the all-terrain mode. When the driving mode of the vehicle changes, the all-terrain mode automatically responds to the changing of the driving mode. The above technical solution can realize automatic selection and switching of the all-terrain modes and the driving modes, which expands the driving-mode switching function of the all-terrain controlling system, fills the gap in terms of the controlling over the driving modes when the conventional all-terrain controlling system is applied to hybrid-electric vehicles, and enables the all-terrain controlling system to be compatible with hybrid-electric vehicle models of various architectures.

### BRIEF DESCRIPTION OF THE DRAWINGS

FIG. 1 is a flow chart of an all-terrain controlling method;
FIG. 2 is a flow chart of the control strategy of a driving mode;
FIG. 3 is a flow chart of the control strategy of an all-terrain mode;
FIG. 4 is an all-terrain controlling apparatus;
FIG. 5 is a structural block diagram of an electronic device; and
FIG. 6 is a schematic diagram of the hardware structure of an electronic device.

### DETAILED DESCRIPTION

In order to make the above purposes, features and advantages of the present invention more apparent and understandable, the present invention, which is defined by the appended clams, will be described in further detail below with reference to the drawings.

The all-terrain controlling method according to the present application is performed based on an all-terrain controlling system in a hybrid-electric vehicle. The all-terrain controlling system includes an ATS (All Terrain System, or all-terrain controlling system) module, an HUT (Head Unit System, or host system) module and an HCU (Hybrid Control Unit, or hybrid-electric controlling unit) module. The ATS module is connected to the HUT module and the HCU module by a CAN bus. The user artificially switches the all-terrain modes by operating a switch of the ATS module, and artificially switches the driving modes of the vehicle by operating a switch of the HUT module, and may also, by using the correspondence relation between the ATS module and the HCU module, automatically switch the all-terrain modes or the driving modes.

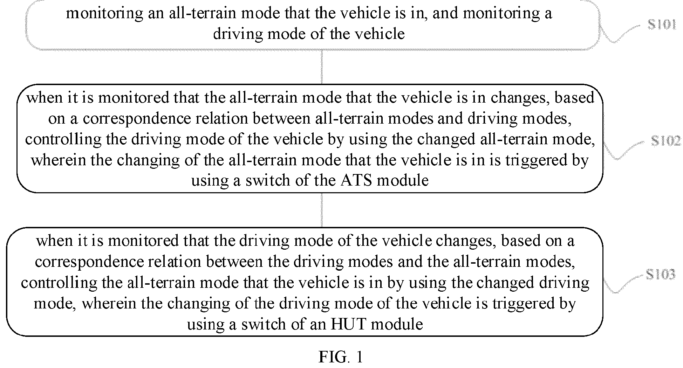

FIG. 1 shows a flow chart of an all-terrain controlling method according to an embodiment of the present application. Referring to FIG. 1, the method is applied to a hybrid-electric vehicle installed with the ATS module, and the method includes:
Step S101: monitoring an all-terrain mode that the vehicle is in, and monitoring a driving mode of the vehicle.

The implementation subject of the embodiments of the present application may be various controllers or processors adapted for being provided in the vehicle. For example, in an aspect, it may be a built-in controller or processor of the vehicle, and corresponding improvements in the hardware and the software may be performed to the controller or processor, to implement the vehicle terrain-mode controlling method according to the embodiments of the present application. In another aspect, it may also be a processor or controller additionally provided in the vehicle, to implement the vehicle terrain-mode controlling method according to the present application. Furthermore, all of the above embodiments fall within the protection scope of the present application.

Particularly, in an embodiment of the present application, the all-terrain controlling apparatus monitors in real time the all-terrain mode (the all-terrain-mode signal) that the vehicle is in. The all-terrain modes that the vehicle is in include a standard mode, an economical mode, a sport mode, a snowfield mode, a muddy-ground mode, a sandy-ground mode, a 4L mode, a rock mode, a mountain-land mode, an uneven-road mode and a silt mode, and the modes can realize different functions.

Particularly, the standard mode (Standard) takes into consideration both of the power performance and the economic efficiency of the entire vehicle, wherein the driving style of the entire vehicle is regular. The economical mode (ECO) improves the fuel economy of the vehicle, and is suitable for even and hard road surfaces such as urban roads and paved roads. In the sport mode (Sport), the accelerator pedal is sensitive, the gear shifting of the transmission is delayed, the power performance of the vehicle is increased, and the driving style of the entire vehicle tends to be intense. The snowfield mode (Snow) is mainly used for driving in a situation of a low adhesion coefficient or off-road driving, and is mainly used in road surfaces such as a snowfield, an ice surface, a grassland and a gravel road. The muddy-ground mode (Mud) is mainly applied for driving in deep mud and shallow mud or off-road driving. The sandy-ground mode (Sand) is mainly applied for driving in desert and gobi or off-road driving. The 4L mode is mainly used in low-speed difficulty-releasing situations (for example, a climbing situation and a car-trapping situation), and situations that require large-torque climbing. The rock mode (Rock) is mainly used for climbing on wet or dry hard road surfaces. The mountain-land mode (Mountain) is mainly applied for driving on mountain roads. The uneven-road mode (Pothole) is mainly applied for uneven roads. The silt mode (Mud_Sand) is mainly applied for road surfaces that are muddy and have deep grooves with sand.

It should be noted that, in the Sport mode, the Snow mode, the Mud mode, the Sand mode, the 4L mode, the Rock mode, the Mountain mode, the Pothole mode and the Mud_Sand mode, the four-wheel-driving system of the vehicle is in a low gear (i.e., the four-wheel-driving system is in the 4L mode), at this time a large torque can be outputted.

Particularly, in an embodiment of the present application, the all-terrain controlling apparatus monitors in real time the driving mode (the driving-mode signal) of the vehicle. The driving modes of the vehicle include an electric-only mode (EV), an energy-saving mode (Save) and a hybrid mode (HEV). In the EV mode, the electric motor supplies the power, and the engine does not operate. In the SAVE mode, when the electric quantity of the battery is greater than a certain value, the electric motor supplies the power; when the electric quantity of the battery is less than a certain value, an electric generator charges the battery; and when a large torque is required, the engine and the electric motor supply the power together. In the HEV mode, the electric motor and the engine supply the power together.

Step S102: when it is monitored that the all-terrain mode that the vehicle is in changes, based on a correspondence relation between all-terrain modes and driving modes, controlling the driving mode of the vehicle by using the changed all-terrain mode, wherein the changing of the all-terrain mode that the vehicle is in is triggered by using a switch of the ATS module.

Table 1 shows the control strategy of an all-terrain controlling system according to an embodiment of the present application. It can be known from Table 1 that, in the Standard mode and the ECO mode, the driving mode of the vehicle is any one of the EV mode, the SAVE mode and the HEV mode, and in the Sport mode, the Snow mode, the Mud mode, the Sand mode, the 4L mode, the Rock mode, the Mountain mode, the Pothole mode and the Mud_Sand mode, the driving mode of the vehicle is the HEV mode.

**Table 1 The control strategy of an all-terrain controlling system**

| **Terrain mode** | **HCU module** | | **ESP module** | **EMS module** | **TCU module** | **EDL module** | **EPS module** | **IP instrument** |
|---|---|---|---|---|---|---|---|---|
| | **driving mode** | **power mode** | | | | | | |
| Standard | EV/SAVE/ HEV | Standard | Standard | Standard | Standard | Standard | Standard | Standard |
| ECO | EV/SAVE/ HEV | ECO | ECO | ECO | ECO | ECO | ECO | ECO |
| Sport | HEV | Sport | Sport | Sport | Sport | Sport | Sport | Sport |
| Snow | HEV | Snow | Snow | Snow | Snow | Snow | Snow | Snow |
| Mud | HEV | Mud | Mud | Mud | Mud | Mud | Mud | Mud |
| Sand | HEV | Sand | Sand | Sand | Sand | Sand | Sand | Sand |
| 4L | HEV | 4L | 4L | 4L | 4L | 4L | 4L | 4L |
| Rock | HEV | Rock | Rock | Rock | Rock | Rock | Rock | Rock |
| Mountain | HEV | Mountain | Mountain | Mountain | Mountain | Mountain | Mountain | Mountain |
| Pothole | HEV | Pothole | Pothole | Pothole | Pothole | Pothole | Pothole | Pothole |
| Mud_ Sand | HEV | Mud_ Sand | Mud_ Sand | Mud Sand | Mud_ Sand | Mud_ Sand | Mud_ Sand | Mud_ Sand |

Particularly, when it is monitored by the all-terrain controlling apparatus that the all-terrain mode that the vehicle is in changes, for example, when the all-terrain mode is switched from the Standard mode into the Mud mode by using the switch of the ATS module, based on a correspondence relation between the all-terrain modes and the driving modes, the HCU module automatically switches the driving mode into the HEV mode.

Step S103: when it is monitored that the driving mode of the vehicle changes, based on a correspondence relation between the driving modes and the all-terrain modes, controlling the all-terrain mode that the vehicle is in by using the changed driving mode, wherein the changing of the driving mode of the vehicle is triggered by using a switch of an HUT module.

Particularly, when it is monitored by the all-terrain controlling apparatus that the driving mode of the vehicle changes, for example, when the HEV mode is switched into the EV mode by using the switch of the HUT module, based on a correspondence relation between the all-terrain modes and the driving modes, the ATS module automatically switches the all-terrain mode into the standard mode.

As compared with the related art, in the present application, the all-terrain mode that the vehicle is in and the driving mode are monitored in real time, and by using the correspondence relation between the driving modes and the all-terrain modes of the vehicle, closed-loop control is performed to the driving mode of the vehicle and the all-terrain mode that the vehicle is in. When the all-terrain mode of the vehicle changes, the driving mode of the vehicle automatically responds to the changing of the all-terrain mode. When the driving mode of the vehicle changes, the all-terrain mode automatically responds to the changing of the driving mode. The above technical solution can realize automatic selection and switching of the all-terrain modes and the driving modes, which expands the driving-mode switching function of the all-terrain controlling system, fills the gap in terms of the controlling over the driving modes when the conventional all-terrain controlling system is applied to hybrid-electric vehicles, and enables the all-terrain controlling system to be compatible with hybrid-electric vehicle models of various architectures.

In an alternative embodiment, in the step S102, the step of, when it is monitored that the all-terrain mode that the vehicle is in changes, based on the correspondence relation between the all-terrain modes and the driving modes, controlling the driving mode of the vehicle by using the changed all-terrain mode includes:
Step S1021: when the changed all-terrain mode is a standard mode or an economical mode, maintaining the driving mode of the vehicle; and
Step S1022: when the changed all-terrain mode is another mode, switching the driving mode of the vehicle into a hybrid mode, wherein the another mode is a mode among the all-terrain modes other than the standard mode and the economical mode.

Particularly, in an embodiment of the present application, when the all-terrain mode of the vehicle changes, the driving mode responds to the changing of the all-terrain mode. When it is monitored by the all-terrain controlling apparatus that the all-terrain mode changes, if the changed all-terrain mode is the Standard mode or the ECO mode, in the Standard mode or the ECO mode, the vehicle can operate in any one of the driving modes, and, therefore, the HCU module does not switch the driving mode of the vehicle; in other words, the driving mode of the vehicle maintains unchanged. If the changed all-terrain mode is the Sport mode or the Snow mode or the Mud mode or the Sand mode or the 4L mode or the Rock mode or the Mountain mode or the Pothole mode or the Mud_Sand mode, because those modes can operate normally merely in the HEV mode, the HCU module is required to switch the driving mode of the vehicle into the HEV mode. As an example, when the all-terrain mode is switched from the 4L mode into the ECO mode, the driving mode of the vehicle maintains unchanged.

In an alternative embodiment, in the step S103, the step of, when it is monitored that the driving mode of the vehicle changes, based on the correspondence relation between the driving modes and the all-terrain modes, controlling the all-terrain mode that the vehicle is in by using the changed driving mode includes:
Step S1031: when the changed driving mode is a hybrid mode, maintaining the all-terrain mode that the vehicle is in; and
Step S1032: when the changed driving mode is an electric-only mode or an energy-saving mode, switching the all-terrain mode that the vehicle is in into a standard mode, and prompting to exit a 4L mode of a four-wheel-driving system.

Particularly, in an embodiment of the present application, when the driving mode of the vehicle changes, the all-terrain mode responds to the changing of the driving mode. When it is monitored by the all-terrain controlling apparatus that the driving mode of the vehicle changes, if the changed driving mode is the HEV mode, because the HEV mode is suitable for all of the all-terrain modes, the ATS module does not automatically switch the all-terrain mode that the vehicle is in. When the changed driving mode is the EV mode or the SAVE mode, because the terrain mode corresponding to the EV mode or the SAVE mode is the Standard mode or the ECO mode, the ATS module automatically switches the all-terrain mode into the Standard mode or the ECO mode. Because, when the ATS module is utilized to automatically switch the all-terrain modes, the output of the ATS module must be a definite result, in an embodiment of the present application, when the changed driving mode is the Standard mode or the ECO mode, the ATS module automatically switches the all-terrain mode into the Standard mode. In the Standard mode, it is not required to output a large torque, and therefore the all-terrain controlling apparatus prompts the user to exit the 4L mode of the four-wheel-driving system.

In an alternative embodiment, the all-terrain controlling method further includes:
Step S104: when the all-terrain mode that the vehicle is in does not change, controlling the driving mode of the vehicle based on a switching request of a user, wherein the switching request of the user is triggered by using the switch of the HUT module.

In an embodiment of the present application, besides switching the driving modes of the vehicle based on the changing of the all-terrain mode, the user may also perform manual selection of the driving modes by using the switch in the HUT module, to switch the driving mode of the vehicle to the optimum operate mode. In other words, when it is monitored by the all-terrain controlling apparatus that the all-terrain mode that the vehicle is in does not change, but it is detected that the switch of the HUT module changes, the all-terrain controlling apparatus outputs the corresponding driving mode based on the changing of the switch of the HUT module. Particularly, the user may operate the switch of the HUT module to generate a driving-mode switching-request signal DrvModReq_HUT, the signal is transmitted to the all-terrain controlling apparatus via the CAN bus, the all-terrain controlling apparatus transmits the driving-mode switching signal DrvModReq_HUT to the HCU module via the CAN bus, and the HCU module controls the driving mode of the vehicle according to the driving-mode switching signal DrvModReq_HUT. In the present embodiment, the driving-mode switching-request signal DrvModReq_HUT carries the target driving mode. The embodiment of the present application provides a controlling-system architecture that can take into consideration both of the manual selection of the driving modes and the automatic switching of the driving modes, which does not only improve the degree of the intellectualization of the all-terrain controlling system, but also satisfies the various demands of the clients to the largest extent.

In an alternative embodiment, in the step S104, the step of, when the all-terrain mode that the vehicle is in does not change, controlling the driving mode of the vehicle based on the switching request of the user includes:
Step S1041: when the switching request of the user is an electric-only mode or an energy-saving mode and the all-terrain mode that the vehicle is in is another mode, switching the driving mode of the vehicle into a hybrid mode, and prompting to exit a 4L mode of a four-wheel-driving system, wherein the another mode is a mode among the all-terrain modes other than a standard mode and an economical mode;
Step S1042: when the switching request of the user is the electric-only mode or the energy-saving mode and the all-terrain mode that the vehicle is in is the standard mode or the economical mode, switching the driving mode of the vehicle according to the switching request of the user; and
Step S1043: when the switching request of the user is the hybrid mode, switching the driving mode of the vehicle into the hybrid mode.

Particularly, in an embodiment of the present application, when the user performs the manual selection of the driving modes by using the switch in the HUT module, the switching is performed based on the subjective intention of the user, and therefore a driving mode that does not match with the all-terrain mode might be selected, which affects the drivability of the vehicle. In order to prevent that, when the user is switching the driving modes of the vehicle by using the switch in the HUT module, the all-terrain controlling apparatus determines the switching operation based on the correspondence relation between the all-terrain modes and the driving modes, and, merely when the switching request is correct, switches the driving mode according to the switching request of the user, i.e., switching the driving mode of the vehicle by using the driving mode corresponding to the switch of the HUT module.

Particularly, when the user requests to switch the driving mode into the electric-only mode or the energy-saving mode by using the switch in the HUT module, and the all-terrain mode of the vehicle is the Sport mode or the Snow mode or the Mud mode or the Sand mode or the 4L mode or the Rock mode or the Mountain mode or the Pothole mode or the Mud_Sand mode, the all-terrain controlling apparatus switches the driving mode of the vehicle into the HEV mode. When the user requests to switch the driving mode into the electric-only mode or the energy-saving mode by using the switch in the HUT module, and the all-terrain mode of the vehicle is the Standard mode or the ECO mode, the all-terrain controlling apparatus switches the driving mode of the vehicle according to the switching request of the user. For example, if the switching request of the user is the EV mode, the all-terrain controlling apparatus switches the driving mode of the vehicle into the EV mode. When the user requests to switch the driving mode into the hybrid mode by using the switch in the HUT module, because the hybrid mode is suitable for all of the terrain modes, the all-terrain controlling apparatus switches the driving mode of the vehicle into the HEV mode.

In an alternative embodiment, the all-terrain controlling method further includes:
Step S105: when the driving mode of the vehicle does not change, switching the all-terrain mode that the vehicle is in based on a switching request of a user, wherein the switching request of the user is triggered by using the switch of the ATS module.

Particularly, in an embodiment of the present application, besides switching the all-terrain modes based on the changing of the driving mode, the user may also switch the all-terrain modes by using the switch in the ATS module, to switch the all-terrain mode of the vehicle to the optimum operate mode. In other words, when it is monitored by the all-terrain controlling apparatus that the driving mode of the vehicle does not change, but it is detected that the switch of the ATS module changes, the all-terrain controlling apparatus, based on the changing of the switch of the ATS module, outputs the corresponding all-terrain mode. Particularly, the user may operate the switch of the ATS module to generate an all-terrain-mode switching-request signal DrivingModReq, the signal is transmitted to the all-terrain controlling apparatus via the CAN bus, the all-terrain controlling apparatus transmits the all-terrain-mode switching-request signal DrivingModReq to the ATS module via the CAN bus, and the ATS module controls the all-terrain mode that the vehicle is in according to the all-terrain-mode switching-request signal DrivingModReq. In the present embodiment, the all-terrain-mode switching-request signal DrivingModReq carries the target all-terrain mode.

The embodiment of the present application provides a controlling-system architecture that can take into consideration both of the manual selection of the all-terrain modes and the automatic switching of the all-terrain modes, which does not only improve the degree of the intellectualization of the all-terrain controlling system, but also satisfies the various demands of the clients to the largest extent.

In an alternative embodiment, in the step S105, the step of, when the driving mode of the vehicle does not change, switching the all-terrain mode that the vehicle is in based on the switching request of the user includes:
Step S1051: when the switching request of the user is another mode, switching the all-terrain mode that the vehicle is in according to the request of the user, and prompting to exit a 4L mode of a four-wheel-driving system, wherein the another mode is a mode among the all-terrain modes other than a standard mode and an economical mode; and
Step S1052: when the switching request of the user is the standard mode or the economical mode, switching the all-terrain mode that the vehicle is in according to the switching request of the user.

Particularly, in an embodiment of the present application, when the user performs the manual switching of the all-terrain modes by using the switch in the ATS module, the switching is performed based on the subjective intention of the user, and therefore an all-terrain mode that does not match with the driving mode might be selected, which affects the drivability of the vehicle. In order to prevent that, when the user is switching the all-terrain modes of the vehicle by using the switch in the ATS module, the all-terrain controlling apparatus determines the switching operation based on the correspondence relation between the driving modes and the all-terrain modes, and, merely when the switching request is correct, switches the driving mode according to the switching request of the user, i.e., switching the all-terrain mode that the vehicle is in by using the all-terrain mode corresponding to the switch of the ATS module.

Particularly, when the user requests to switch the all-terrain mode into the Sport mode or the Snow mode or the Mud mode or the Sand mode or the 4L mode or the Rock mode or the Mountain mode or the Pothole mode or the Mud_Sand mode by using the switch in the ATS module, the apparatus switches the all-terrain mode that the vehicle is in according to the request of the user, and prompts to exit the 4L mode of the four-wheel-driving system. When the user requests to switch the all-terrain mode into the Standard mode or the ECO mode by using the switch in the ATS module, the apparatus switches the all-terrain mode that the vehicle is in according to the request of the user. As an example, if the switching request of the user is the Snow mode, the all-terrain controlling apparatus switches the all-terrain mode that the vehicle is in into the Snow mode, and prompts the user to exit the 4L mode of the four-wheel-driving system.

In an alternative embodiment, the hybrid-electric vehicle is installed with an ESP module, an EMS module, a TCU module, a 4WD module, an EPS module, an EDL module and an IP instrument, and the all-terrain controlling method further includes:
Step S106: based on the correspondence relations of the all-terrain mode with the ESP module, the EMS module, the TCU module, the 4WD module, the EPS module, the EDL module and the IP instrument, controlling the ESP module, the EMS module, the TCU module, the 4WD module, the EPS module, the EDL module and the IP instrument to operate, respectively.

Particularly, in an embodiment of the present application, the ATS module is connected to the ESP (Electronic Stability Program, or vehicle-body electronically stabilizing system) module, the EMS (Engine Management System, or engine managing system) module, the TCU (Transmission Control Unit, or transmission controlling unit) module, the 4WD (Four Wheel Driving System, or four-wheel-driving system) module, the EPS (Electric Power Steering, or electronic power-assisted steering system) module, the EDL (Electronic Differential Lock, or electronic differential lock) module and the IP (Instrument Panel, instrument) by the CAN bus. When the all-terrain mode changes, the ESP module, the EMS module, the TCU module, the 4WD module, the EPS module, the EDL module and the IP instrument employ the corresponding control strategies (executed according to Table 1). As an example, when the all-terrain mode is switched from the Standard mode into the Snow mode, the ESP module, the EMS module, the TCU module, the 4WD module, the EPS module and the EDL module execute the corresponding operations in the Snow mode.

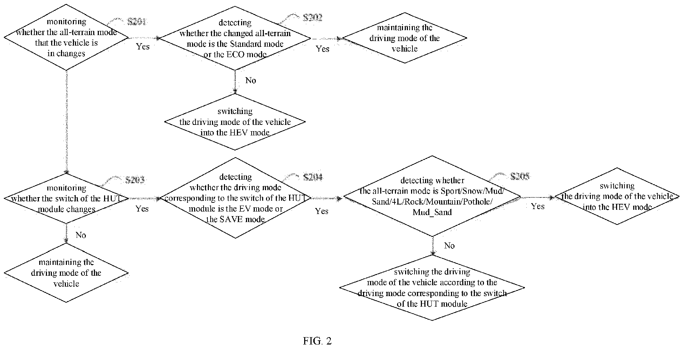

FIG. 2 shows a flow chart of the control strategy of a driving mode according to an embodiment of the present application. Referring to FIG. 2, the method for controlling the driving mode according to the present embodiment includes:
S201: monitoring whether the all-terrain mode that the vehicle is in changes; when the all-terrain mode that the vehicle is in changes, executing S202; and when the all-terrain mode that the vehicle is in does not change, executing S203;
S202: detecting whether the changed all-terrain mode is the Standard mode or the ECO mode; if yes, maintaining the driving mode of the vehicle; and if no, switching the driving mode of the vehicle into the HEV mode;
S203: monitoring whether the switch of the HUT module changes; if the switch of the HUT module changes, executing S204; and if the switch of the HUT module does not change, maintaining the driving mode of the vehicle;
S204: detecting whether the driving mode corresponding to the switch of the HUT module is the EV mode or the SAVE mode; if yes, executing S205; and if no, switching the driving mode of the vehicle into the HEV mode; and
S205: detecting whether the all-terrain mode that the vehicle is in is the Sport mode or the Snow mode or the Mud mode or the Sand mode or the 4L mode or the Rock mode or the Mountain mode or the Pothole mode or the Mud_Sand mode; if yes, switching the driving mode of the vehicle into the HEV mode, and prompting the user to exit the 4L mode; and if no, switching the driving mode of the vehicle according to the driving mode corresponding to the switch of the HUT module.

Particularly, in an embodiment of the present application, the all-terrain controlling apparatus continuously monitors the all-terrain mode that the vehicle is in and the switch of the HUT module. Firstly, when the all-terrain mode that the vehicle is in changes but the switch of the HUT module does not change, the controlling of the driving mode is executed according to S202. Secondly, when the all-terrain mode that the vehicle is in does not change but the switch of the HUT module changes, the controlling of the driving mode is executed according to S204 and S205. Thirdly, when both of the all-terrain mode that the vehicle is in and the switch of the HUT module change, because the priority of the all-terrain mode is higher than the priority of the switch of the HUT module, the controlling of the driving mode is executed according to S202.

As an example, when the all-terrain mode that the vehicle is in changes from the Sport mode into the Rock mode, but the switch of the HUT module does not change, in this case the all-terrain controlling apparatus switches the driving mode of the vehicle into the HEV mode. In the present embodiment, because the driving mode corresponding to the Sport mode before change is the HEV mode, here it may be understood as that the driving mode maintains unchanged. However, when the all-terrain mode changes from the Standard mode into the Sport mode, in this case it is required to switch the driving mode (the EV mode or the SAVE mode or the HEV mode) corresponding to the Standard mode into the HEV mode.

As an example, when the all-terrain mode that the vehicle is in does not change (the current all-terrain mode is the Standard mode), but the switch of the HUT module changes, the driving mode corresponding to the switch of the HUT module changes from the HEV mode into the EV mode, in which case the all-terrain controlling apparatus switches the driving mode of the vehicle into the EV mode.

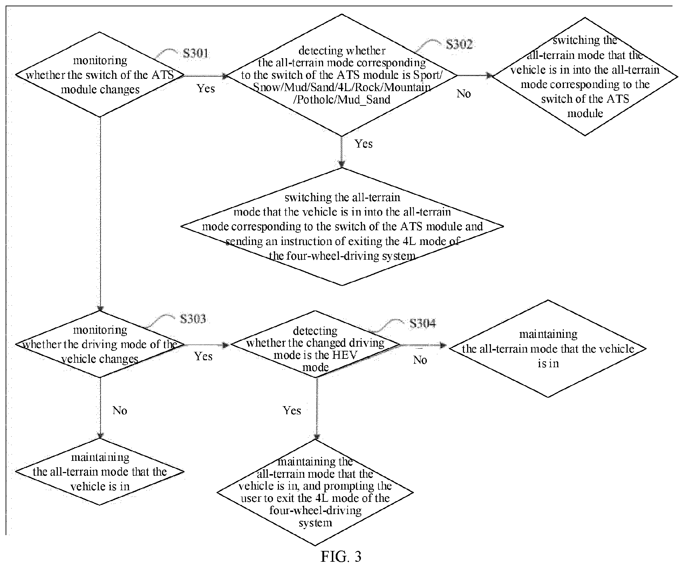

FIG. 3 shows a flow chart of the control strategy of an all-terrain mode according to an embodiment of the present application. Referring to FIG. 3, the method for controlling the all-terrain mode according to the present embodiment includes:
S301: monitoring whether the switch of the ATS module changes; when the switch of the ATS module changes, executing S302; and when the switch of the ATS module does not change, executing S303;
S302: detecting whether the all-terrain mode corresponding to the switch of the ATS module is the Sport mode or the Snow mode or the Mud mode or the Sand mode or the 4L mode or the Rock mode or the Mountain mode or the Pothole mode or the Mud_Sand mode; if yes, switching the all-terrain mode that the vehicle is in into the all-terrain mode corresponding to the switch of the ATS module and sending an instruction of exiting the 4L mode of the four-wheel-driving system; and if no, switching the all-terrain mode that the vehicle is in into the all-terrain mode corresponding to the switch of the ATS module;
S303: monitoring whether the driving mode of the vehicle changes; if the driving mode of the vehicle changes, executing S304; and if the driving mode of the vehicle does not change, maintaining the all-terrain mode that the vehicle is in; and
S304: detecting the changed driving mode of the vehicle; if the changed driving mode is the HEV mode, maintaining the all-terrain mode that the vehicle is in; and if the changed driving mode is the EV mode or the SAVE mode, switching the all-terrain mode that the vehicle is in into the Standard mode, and prompting to exit the 4L mode of the four-wheel-driving system.

Particularly, in an embodiment of the present application, the all-terrain controlling apparatus continuously monitors the driving mode of the vehicle and the switch of the ATS module. Firstly, when the switch of the ATS module changes, but the driving mode of the vehicle does not change, the all-terrain mode that the vehicle is in is controlled in the manner of S302. Secondly, when the switch of the ATS module does not change, but the driving mode of the vehicle changes, the all-terrain mode that the vehicle is in is controlled in the manner of S304. Thirdly, when both of the switch of the ATS module and the driving mode of the vehicle change, the all-terrain mode that the vehicle is in is controlled in the manner of S302.

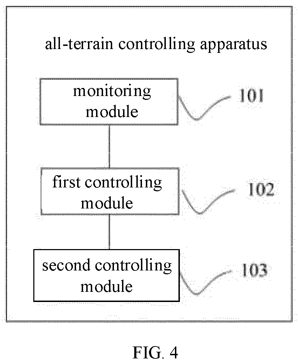

In the second aspect, the present application discloses an all-terrain controlling apparatus, which is applied to a hybrid-electric vehicle installed with an ATS module. FIG. 4 shows an all-terrain controlling apparatus according to an embodiment of the present application. Referring to FIG. 4, the apparatus includes:
a first monitoring module 101 configured for monitoring an all-terrain mode that the vehicle is in and monitoring a driving mode of the vehicle;
a first controlling module 103 configured for, when it is monitored that the all-terrain mode that the vehicle is in changes, based on a correspondence relation between all-terrain modes and driving modes, controlling the driving mode of the vehicle by using the changed all-terrain mode, wherein the changing of the all-terrain mode that the vehicle is in is triggered by using a switch of the ATS module; and
a second controlling module 103 configured for, when it is monitored that the driving mode of the vehicle changes, based on a correspondence relation between driving modes and all-terrain modes, controlling the all-terrain mode that the vehicle is in by using the changed driving mode, wherein the changing of the driving mode of the vehicle is triggered by using a switch of an HUT module.

In an alternative embodiment, the first monitoring module 101 includes:
a first monitoring submodule 1011 configured for monitoring an all-terrain mode that the vehicle is in; and
a second monitoring submodule 1012 configured for monitoring a driving mode of the vehicle.

In an alternative embodiment, the first controlling module 102 includes:
a first controlling submodule configured for, when the changed all-terrain mode is a standard mode or an economical mode, maintaining the driving mode of the vehicle; and
a second controlling submodule configured for, when the changed all-terrain mode is another mode, switching the driving mode of the vehicle into a hybrid mode, wherein the another mode is a mode among the all-terrain modes other than the standard mode and the economical mode.

In an alternative embodiment, the second controlling module 103 includes:
a third controlling submodule configured for, when the changed driving mode is a hybrid mode, maintaining the all-terrain mode that the vehicle is in; and
a fourth controlling submodule configured for, when the changed driving mode is an electric-only mode or an energy-saving mode, switching the all-terrain mode that the vehicle is in into a standard mode, and prompting to exit a 4L mode of a four-wheel-driving system.

In an alternative embodiment, the all-terrain controlling apparatus further includes:
a third controlling module configured for, when the all-terrain mode that the vehicle is in does not change, controlling the driving mode of the vehicle based on a switching request of a user, wherein the switching request of the user is triggered by using the switch of the HUT module; and
a fourth controlling module configured for, when the driving mode of the vehicle does not change, switching the all-terrain mode that the vehicle is in based on a switching request of a user, wherein the switching request of the user is triggered by using the switch of the ATS module.

In the third aspect, the present application discloses a computer-readable storage medium, wherein the computer-readable storage medium stores an all-terrain controlling program, and when the all-terrain controlling program is executed by a processor, the steps of the all-terrain controlling method according to any one of the embodiments in the first aspect are implemented.

In the fourth aspect, the present application discloses a vehicle, wherein an operation state of the vehicle is controlled by using the all-terrain controlling method according to any one of the embodiments in the first aspect.

Regarding the device embodiments, because they are substantially similar to the process embodiments, they are described simply, and the related parts may refer to the description on the process embodiments.

The embodiments of the description are described in the mode of progression, each of the embodiments emphatically describes the differences from the other embodiments, and the same or similar parts of the embodiments may refer to each other.

A person skilled in the art should understand that the embodiments of the present application may be provided as a method, a device, or a computer program product. Therefore, the embodiments of the present application may take the form of a complete hardware embodiment, a complete software embodiment, or an embodiment combining software and hardware. Furthermore, the embodiments of the present application may take the form of a computer program product implemented on one or more computer-usable storage media (including but not limited to a disk storage, a CD-ROM, an optical memory and so on) containing a computer-usable program code therein.

The embodiments of the present application are described with reference to the flow charts and/or block diagrams of the method, the terminal device (system), and the computer program product according to the embodiments of the present application. It should be understood that each flow and/or block in the flow charts and/or block diagrams, and combinations of the flows and/or blocks in the flow charts and/or block diagrams, may be implemented by a computer program instruction. The computer program instructions may be provided to a processor of a general-purpose computer, a special-purpose computer, an embedded processor, or another programmable data processing terminal device to generate a machine, so that a device for implementing the functions specified in one or more flows of the flow charts and/or one or more blocks of the block diagrams can be generated by instructions executed by the processor of the computers or the other programmable data processing terminal device.

The computer program instructions may also be stored in a computer-readable memory that can instruct the computers or the other programmable data processing terminal device to operate in a specific mode, so that the instructions stored in the computer-readable memory generate an article including an instruction device, and the instruction device implements the functions specified in one or more flows of the flow charts and/or one or more blocks of the block diagrams.

The computer program instructions may also be loaded to the computers or the other programmable data processing terminal device, so that the computers or the other programmable data processing terminal device implement a series of operation steps to generate the computer-implemented processes, whereby the instructions executed in the computers or the other programmable data processing terminal device provide the steps for implementing the functions specified in one or more flows of the flow charts and/or one or more blocks of the block diagrams.

The above-described device embodiments are merely illustrative, wherein the units that are described as separate components may or may not be physically separate, and the components that are displayed as units may or may not be physical units; in other words, they may be located at the same one location, and may also be distributed to a plurality of network units. Some or all of the modules may be selected according to actual demands to realize the purposes of the solutions of the embodiments. A person skilled in the art can understand and implement the technical solutions without paying creative work.

Each component embodiment of the present application may be implemented by hardware, or by software modules that are operated in one or more processors, or by a combination thereof. A person skilled in the art should understand that some or all of the functions of some or all of the components of the computing and processing device according to the embodiments of the present application may be implemented by using a microprocessor or a digital signal processor (DSP) in practice. The present application may also be implemented as apparatus or device programs (for example, computer programs and computer program products) for implementing part of or the whole of the method described herein. Such programs for implementing the present application may be stored in a computer-readable medium, or may be in the form of one or more signals. Such signals may be downloaded from an Internet website, or provided on a carrier signal, or provided in any other forms.

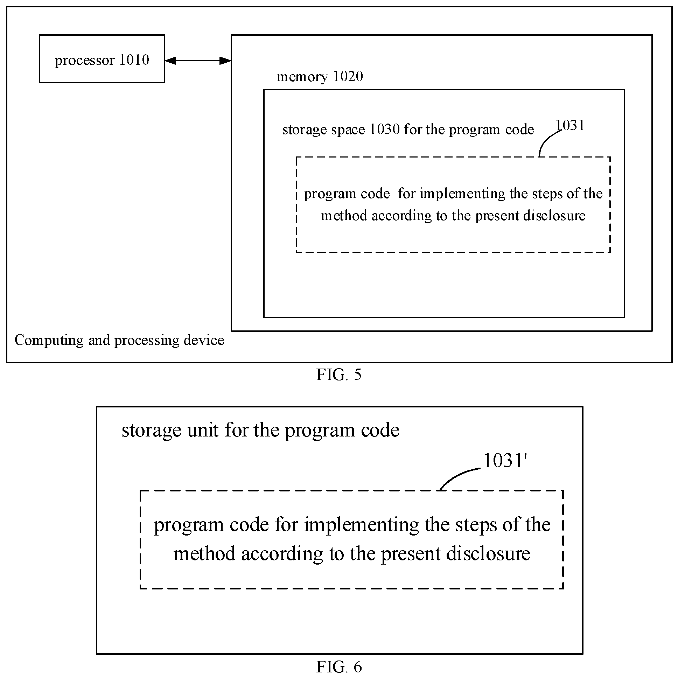

For example, FIG. 5 shows a computing and processing device that can implement the method according to the present application. The computing and processing device traditionally includes a processor 1010 and a computer program product or computer-readable medium in the form of a memory 1020. The memory 1020 may be electronic memories such as flash memory, EEPROM (Electrically Erasable Programmable Read Only Memory), EPROM, hard disk or ROM. The memory 1020 has the storage space 1030 of the program code 1031 for implementing any steps of the above method. For example, the storage space 1030 for program code may contain program codes 1031 for individually implementing each of the steps of the above method. Those program codes may be read from one or more computer program products or be written into the one or more computer program products. Those computer program products include program code carriers such as a hard disk, a compact disk (CD), a memory card or a floppy disk. Such computer program products are usually portable or fixed storage units as shown in FIG. 6. The storage unit may have storage segments or storage spaces with similar arrangement to the memory 1020 of the computing and processing device in FIG. 5. The program codes may, for example, be compressed in a suitable form. Generally, the storage unit contains a computer-readable code 1031', which can be read by a processor like 1010. When those codes are executed by the computing and processing device, the codes cause the computing and processing device to implement each of the steps of the method described above.

Finally, it should also be noted that, in the present text, relation terms such as first and second are merely intended to distinguish one entity or operation from another entity or operation, and that does not necessarily require or imply that those entities or operations have therebetween any such actual relation or order. Furthermore, the terms "include", "comprise" or any variants thereof are intended to cover non-exclusive inclusions, so that processes, methods, articles or terminal devices that include a series of elements do not only include those elements, but also include other elements that are not explicitly listed, or include the elements that are inherent to such processes, methods, articles or terminal devices. Unless further limitation is set forth, an element defined by the wording "comprising a ..." does not exclude additional same element in the process, method, article or terminal device comprising the element.

The all-terrain controlling method and apparatus, the storage medium and the vehicle according to the present application have been described in detail above. The principle and the embodiments of the present application are described herein with reference to the particular examples, and the description of the above embodiments is merely intended to facilitate to comprehend the method according to the present application and its core concept. Moreover, for a person skilled in the art, according to the concept of the present application, the particular embodiments and the range of application may be varied. In conclusion, the contents of the description should not be understood as limiting the present application.

## Claims

1. An all-terrain controlling method applied to a hybrid-electric vehicle installed with an All-Terrain-System, ATS, module (100), the method comprising:
(S101) monitoring an all-terrain mode (102) that the vehicle is in, and monitoring a driving mode (104) of the vehicle;
(S102) when it is monitored that the all-terrain mode (102) that the vehicle is in changes, based on a correspondence relation between all-terrain modes and driving modes, controlling the driving mode (104) of the vehicle by using the changed all-terrain mode (102), wherein the changing of the all-terrain mode (102) that the vehicle is in is triggered by using a switch of the ATS module (100); and
(S103) when it is monitored that the driving mode (104) of the vehicle changes, based on a correspondence relation between the driving modes and the all-terrain modes, controlling the all-terrain mode (102) that the vehicle is in by using the changed driving mode (104), wherein the changing of the driving mode (104) of the vehicle is triggered by using a switch of a Head Unit System, HUT, module (106).

2. The all-terrain controlling method according to claim 1, wherein the step of, (S102) when it is monitored that the all-terrain mode (102) that the vehicle is in changes, based on the correspondence relation between the all-terrain modes and the driving modes, controlling the driving mode (104) of the vehicle by using the changed all-terrain mode (102) comprises:
(S201) when the changed all-terrain mode (102) is a standard mode or an economical mode, maintaining the driving mode (104) of the vehicle; and
(S202) when the changed all-terrain mode (102) is another mode, switching the driving mode (104) of the vehicle into a hybrid mode, wherein the another mode is a mode among the all-terrain modes other than the standard mode and the economical mode.

3. The all-terrain controlling method according to claim 1, wherein the step of, (S103) when it is monitored that the driving mode (104) of the vehicle changes, based on the correspondence relation between the driving modes and the all-terrain modes, controlling the all-terrain mode (102) that the vehicle is in by using the changed driving mode (104) comprises:
(S301) when the changed driving mode (104) is a hybrid mode, maintaining the all-terrain mode (102) that the vehicle is in; and
(S302) when the changed driving mode (104) is an electric-only mode or an energy-saving mode, switching the all-terrain mode (102) that the vehicle is in into a standard mode, and prompting to exit a 4L mode of a four-wheel-driving system.

4. The all-terrain controlling method according to claim 1, wherein the method further comprises:
(S401) when the all-terrain mode (102) that the vehicle is in does not change, controlling the driving mode (104) of the vehicle based on a switching request of a user, wherein the switching request of the user is triggered by using the switch of the HUT module (106).

5. The all-terrain controlling method according to claim 4, wherein the step of, (S401) when the all-terrain mode (102) that the vehicle is in does not change, controlling the driving mode (104) of the vehicle based on the switching request of the user comprises:
(S501) when the switching request of the user is an electric-only mode or an energy-saving mode and the all-terrain mode (102) that the vehicle is in is another mode, switching the driving mode (104) of the vehicle into a hybrid mode, and prompting to exit a 4L mode of a four-wheel-driving system, wherein the another mode is a mode among the all-terrain modes other than a standard mode and an economical mode;
(S502) when the switching request of the user is the electric-only mode or the energy-saving mode and the all-terrain mode (102) that the vehicle is in is the standard mode or the economical mode, switching the driving mode (104) of the vehicle according to the switching request of the user; and
(S503) when the switching request of the user is the hybrid mode, switching the driving mode (104) of the vehicle into the hybrid mode.

6. The all-terrain controlling method according to claim 1, wherein the method further comprises:
(S601) when the driving mode (104) of the vehicle does not change, switching the all-terrain mode (102) that the vehicle is in based on a switching request of a user, wherein the switching request of the user is triggered by using the switch of the ATS module (100).

7. The all-terrain controlling method according to claim 6, wherein the step of, (S601) when the driving mode (104) of the vehicle does not change, switching the all-terrain mode (102) that the vehicle is in based on the switching request of the user comprises:
(S701) when the switching request of the user is another mode, switching the all-terrain mode (102) that the vehicle is in according to the request of the user, and prompting to exit a 4L mode of a four-wheel-driving system, wherein the another mode is a mode among the all-terrain modes other than a standard mode and an economical mode; and
(S702) when the switching request of the user is the standard mode or the economical mode, switching the all-terrain mode (102) that the vehicle is in according to the switching request of the user.

8. An all-terrain controlling apparatus applied to a hybrid-electric vehicle installed with an All-Terrain-System, ATS, module (100), and the apparatus comprises:
a first monitoring module (108) configured for monitoring an all-terrain mode (102) that the vehicle is in;
a second monitoring module (110) configured for monitoring a driving mode (104) of the vehicle;
a first controlling module (112) configured for, when it is monitored that the all-terrain mode (102) that the vehicle is in changes, based on a correspondence relation between all-terrain modes and driving modes, controlling the driving mode (104) of the vehicle by using the changed all-terrain mode (102), wherein the changing of the all-terrain mode (102) that the vehicle is in is triggered by using a switch of the ATS module (100); and
a second controlling module (114) configured for, when it is monitored that the driving mode (104) of the vehicle changes, based on a correspondence relation between the driving modes and the all-terrain modes, controlling the all-terrain mode (102) that the vehicle is in by using the changed driving mode (104), wherein the changing of the driving mode (104) of the vehicle is triggered by using a switch of a Head Unit System, HUT, module (106).

9. A vehicle being an hybrid-electric vehicle and comprising at least an All-Terrain System, ATS, module (100), a Head Unit System, HUT, module (106) and the all-terrain controlling apparatus according to claim 8.

10. A computer program, comprising a computer-readable code (1031; 1031'), and when the computer-readable code (1031; 1031') is executed in a computing and processing device, the computer-readable code causes the computing and processing device to implement the steps of the all-terrain controlling method according to any one of claims 1-7.

11. A readable storage medium, storing a program or instruction, and when the program or instruction is executed by a processor, the computer program according to claim 10 is implemented.

## Patentansprüche

1. Geländesteuerungsverfahren, angewendet bei einem Hybridelektrofahrzeug, das mit einem Geländesystem-, ATS-, Modul (100) ausgestattet ist, wobei das Verfahren aufweist:
(S101) Überwachen eines Geländemodus (102), in dem sich das Fahrzeug befindet, und Überwachen eines Fahrmodus (104) des Fahrzeugs;
(S102) wenn überwacht wird, dass sich der Geländemodus (102), in dem sich das Fahrzeug befindet, ändert, basierend auf einer Entsprechungsbeziehung zwischen Geländemodi und Fahrmodi, Steuern des Fahrmodus (104) des Fahrzeugs unter Verwendung des geänderten Geländemodus (102), wobei das Ändern des Geländemodus (102), in dem sich das Fahrzeug befindet, unter Verwendung eines Schalters des ATS-Moduls (100) ausgelöst wird; und
(S103) wenn überwacht wird, dass sich der Fahrmodus (104) des Fahrzeugs ändert, basierend auf einer Entsprechungsbeziehung zwischen den Fahrmodi und den Geländemodi, Steuern des Geländemodus (102), in dem sich das Fahrzeug befindet, unter Verwendung des geänderten Fahrmodus (104), wobei das Ändern des Fahrmodus (104) des Fahrzeugs unter Verwendung eines Schalters eines Head-Unit-System-, HUT-, Moduls (106) ausgelöst wird.

2. Geländesteuerungsverfahren nach Anspruch 1, wobei der Schritt des, (S102) wenn überwacht wird, dass sich der Geländemodus (102), in dem sich das Fahrzeug befindet, ändert, basierend auf der Entsprechungsbeziehung zwischen den Geländemodi und den Fahrmodi, Steuerns des Fahrmodus (104) des Fahrzeugs unter Verwendung des geänderten Geländemodus (102) aufweist:
(S201) wenn der geänderte Geländemodus (102) ein Standardmodus oder ein Ökonomiemodus ist, Beibehalten des Fahrmodus (104) des Fahrzeugs; und
(S202) wenn der geänderte Geländemodus (102) ein anderer Modus ist, Umschalten des Fahrmodus (104) des Fahrzeugs in einen Hybridmodus, wobei der andere Modus ein Modus unter den Geländemodi außer dem Standardmodus und dem Ökonomiemodus ist.

3. Geländesteuerungsverfahren nach Anspruch 1, wobei der Schritt des, (S103) wenn überwacht wird, dass sich der Fahrmodus (104) des Fahrzeugs ändert, basierend auf der Entsprechungsbeziehung zwischen den Fahrmodi und den Geländemodi, Steuerns des Geländemodus (102), in dem sich das Fahrzeug befindet, unter Verwendung des geänderten Fahrmodus (104) aufweist:
(S301) wenn der geänderte Fahrmodus (104) ein Hybridmodus ist, Beibehalten des Geländemodus (102), in dem sich das Fahrzeug befindet; und
(S302) wenn der geänderte Fahrmodus (104) ein rein elektrischer Modus oder ein Energiesparmodus ist, Umschalten des Geländemodus (102), in dem sich das Fahrzeug befindet, in einen Standardmodus und Auffordern zum Verlassen eines 4L-Modus eines Vierradantriebssystems.

4. Geländesteuerungsverfahren nach Anspruch 1, wobei das Verfahren ferner aufweist:
(S401) wenn sich der Geländemodus (102), in dem sich das Fahrzeug befindet, nicht ändert, Steuern des Fahrmodus (104) des Fahrzeugs basierend auf einer Umschaltanforderung eines Benutzers, wobei die Umschaltanforderung des Benutzers unter Verwendung des Schalters des HUT-Moduls (106) ausgelöst wird.

5. Geländesteuerungsverfahren nach Anspruch 4, wobei der Schritt des, (S401) wenn sich der Geländemodus (102), in dem sich das Fahrzeug befindet, nicht ändert, Steuerns des Fahrmodus (104) des Fahrzeugs basierend auf der Umschaltanforderung des Benutzers aufweist:
(S501) wenn die Umschaltanforderung des Benutzers ein rein elektrischer Modus oder ein Energiesparmodus ist und der Geländemodus (102), in dem sich das Fahrzeug befindet, ein anderer Modus ist, Umschalten des Fahrmodus (104) des Fahrzeugs in einen Hybridmodus und Auffordern zum Verlassen eines 4L-Modus eines Vierradantriebssystems, wobei der andere Modus ein Modus unter den Geländemodi außer einem Standardmodus und einem Ökonomiemodus ist;
(S502) wenn die Umschaltanforderung des Benutzers der rein elektrische Modus oder der Energiesparmodus ist und der Geländemodus (102), in dem sich das Fahrzeug befindet, der Standardmodus oder der Ökonomiemodus ist, Umschalten des Fahrmodus (104) des Fahrzeugs gemäß der Umschaltanforderung des Benutzers; und
(S503) wenn die Umschaltanforderung des Benutzers der Hybridmodus ist, Umschalten des Fahrmodus (104) des Fahrzeugs in den Hybridmodus.

6. Geländesteuerungsverfahren nach Anspruch 1, wobei das Verfahren ferner aufweist:
(S601) wenn sich der Fahrmodus (104) des Fahrzeugs nicht ändert, Umschalten des Geländemodus (102), in dem sich das Fahrzeug befindet, basierend auf einer Umschaltanforderung eines Benutzers, wobei die Umschaltanforderung des Benutzers unter Verwendung des Schalters des ATS-Moduls (100) ausgelöst wird.

7. Geländesteuerungsverfahren nach Anspruch 6, wobei der Schritt des, (S601) wenn sich der Fahrmodus (104) des Fahrzeugs nicht ändert, Umschaltens des Geländemodus (102), in dem sich das Fahrzeug befindet, basierend auf der Umschaltanforderung des Benutzers aufweist:
(S701) wenn die Umschaltanforderung des Benutzers ein anderer Modus ist, Umschalten des Geländemodus (102), in dem sich das Fahrzeug befindet, gemäß der Anforderung des Benutzers und Auffordern zum Verlassen eines 4L-Modus eines Vierradantriebssystems, wobei der andere Modus ein Modus unter den Geländemodi außer einem Standardmodus und einem Ökonomiemodus ist; und
(S702) wenn die Umschaltanforderung des Benutzers der Standardmodus oder der Ökonomiemodus ist, Umschalten des Geländemodus (102), in dem sich das Fahrzeug befindet, gemäß der Umschaltanforderung des Benutzers.

8. Geländesteuerungsvorrichtung, angewendet bei einem Hybridelektrofahrzeug, das mit einem Geländesystem-, ATS-, Modul (100) ausgestattet ist, und wobei die Vorrichtung aufweist:
ein erstes Überwachungsmodul (108), konfiguriert, um einen Geländemodus (102), in dem sich das Fahrzeug befindet, zu überwachen;
ein zweites Überwachungsmodul (110), konfiguriert, um einen Fahrmodus (104) des Fahrzeugs zu überwachen;
ein erstes Steuermodul (112), konfiguriert, um, wenn überwacht wird, dass sich der Geländemodus (102), in dem sich das Fahrzeug befindet, ändert, basierend auf einer Entsprechungsbeziehung zwischen Geländemodi und Fahrmodi, den Fahrmodus (104) des Fahrzeugs unter Verwendung des geänderten Geländemodus (102) zu steuern, wobei das Ändern des Geländemodus (102), in dem sich das Fahrzeug befindet, unter Verwendung eines Schalters des ATS-Moduls (100) ausgelöst wird; und
ein zweites Steuermodul (114), konfiguriert, um, wenn überwacht wird, dass sich der Fahrmodus (104) des Fahrzeugs ändert, basierend auf einer Entsprechungsbeziehung zwischen den Fahrmodi und den Geländemodi, den Geländemodus (102), in dem sich das Fahrzeug befindet, unter Verwendung des geänderten Fahrmodus (104) zu steuern, wobei das Ändern des Fahrmodus (104) des Fahrzeugs unter Verwendung eines Schalters eines Head-Unit-System-, HUT-, Moduls (106) ausgelöst wird.

9. Fahrzeug, das ein Hybridelektrofahrzeug ist und mindestens ein Geländesystem-, ATS-, Modul (100), ein Head-Unit-System-, HUT-, Modul (106) und die Geländesteuerungsvorrichtung nach Anspruch 8 aufweist.

10. Computerprogramm, aufweisend einen computerlesbaren Code (1031; 1031'), und wenn der computerlesbare Code (1031; 1031') in einer Rechen- und Verarbeitungsvorrichtung ausgeführt wird, veranlasst der computerlesbare Code die Rechen- und Verarbeitungsvorrichtung, die Schritte des Geländesteuerungsverfahrens nach einem der Ansprüche 1 bis 7 zu implementieren.

11. Lesbares Speichermedium, das ein Programm oder eine Anweisung speichert, und wenn das Programm oder die Anweisung durch einen Prozessor ausgeführt wird, wird das Computerprogramm nach Anspruch 10 implementiert.

## Revendications

1. Procédé de commande tout-terrain appliqué à un véhicule hybride-électrique équipé d'un module de système tout-terrain, ATS, (100), le procédé comprenant les étapes suivantes :
(S101) la surveillance d'un mode tout-terrain (102) dans lequel le véhicule se trouve et la surveillance d'un mode de conduite (104) du véhicule ;
(S102) lorsqu'il est constaté au cours de la surveillance que le mode tout-terrain (102) dans lequel le véhicule se trouve a été modifié, sur la base d'une relation de correspondance entre des modes tout-terrain et des modes de conduite, la commande du mode de conduite (104) du véhicule en utilisant le mode tout-terrain modifié (102), dans lequel la modification du mode tout-terrain (102) dans lequel le véhicule se trouve est déclenchée en utilisant un commutateur du module ATS (100) ; et
(S103) lorsqu'il est constaté au cours de la surveillance que le mode de conduite (104) du véhicule a été modifié, sur la base d'une relation de correspondance entre les modes de conduite et les modes tout-terrain, la commande du mode tout-terrain (102) dans lequel le véhicule se trouve en utilisant le mode de conduite modifié (104), dans lequel la modification du mode de conduite (104) du véhicule est déclenchée en utilisant un commutateur d'un module de système d'unité principale, HUT, (106).

2. Procédé de commande tout-terrain selon la revendication 1, dans lequel l'étape (S102) consistant à, lorsqu'il est constaté au cours de la surveillance que le mode tout-terrain (102) dans lequel le véhicule se trouve a été modifié, sur la base de la relation de correspondance entre les modes tout-terrain et les modes de conduite, commander le mode de conduite (104) du véhicule en utilisant le mode tout-terrain modifié (102) comprend les étapes suivantes :
(S201) lorsque le mode tout-terrain modifié (102) est un mode standard ou un mode économique, le maintien du mode de conduite (104) du véhicule ; et
(S202) lorsque le mode tout-terrain modifié (102) est un autre mode, la commutation du mode de conduite (104) du véhicule selon un mode hybride, dans lequel l'autre mode est un mode parmi les modes tout-terrain autre que le mode standard et que le mode économique.

3. Procédé de commande tout-terrain selon la revendication 1, dans lequel l'étape (S103) consistant à, lorsqu'il est constaté au cours de la surveillance que le mode de conduite (104) du véhicule a été modifié, sur la base de la relation de correspondance entre les modes de conduite et les modes tout-terrain, commander le mode tout-terrain (102) dans lequel le véhicule se trouve en utilisant le mode de conduite modifié (104) comprend les étapes suivantes :
(S301) lorsque le mode de conduite modifié (104) est un mode hybride, le maintien du mode tout-terrain (102) dans lequel le véhicule se trouve ; et
(S302) lorsque le mode de conduite modifié (104) est un mode tout électrique ou un mode d'économie d'énergie, la commutation du mode tout-terrain (102) dans lequel le véhicule se trouve selon un mode standard et l'invitation à quitter un mode 4L d'un système à quatre roues motrices.

4. Procédé de commande tout-terrain selon la revendication 1, dans lequel le procédé comprend en outre l'étape suivante :
(S401) lorsque le mode tout-terrain (102) dans lequel le véhicule se trouve n'est pas modifié, la commande du mode de conduite (104) du véhicule sur la base d'une demande de commutation d'un utilisateur, dans lequel la demande de commutation de l'utilisateur est déclenchée en utilisant le commutateur du module HUT (106).

5. Procédé de commande tout-terrain selon la revendication 4, dans lequel l'étape (S401) consistant à, lorsque le mode tout-terrain (102) dans lequel le véhicule se trouve n'est pas modifié, commander le mode de conduite (104) du véhicule sur la base de la demande de commutation de l'utilisateur comprend les étapes suivantes :
(S501) lorsque la demande de commutation de l'utilisateur est un mode tout électrique ou un mode d'économie d'énergie et que le mode tout-terrain (102) dans lequel le véhicule se trouve est un autre mode, la commutation du mode de conduite (104) du véhicule selon un mode hybride et l'invitation à quitter un mode 4L d'un système à quatre roues motrices, dans lequel l'autre mode est un mode parmi les modes tout-terrain autre qu'un mode standard et qu'un mode économique ;
(S502) lorsque la demande de commutation de l'utilisateur est le mode tout électrique ou le mode d'économie d'énergie et que le mode tout-terrain (102) dans lequel le véhicule se trouve est le mode standard ou le mode économique, la commutation du mode de conduite (104) du véhicule conformément à la demande de commutation de l'utilisateur ; et
(S503) lorsque la demande de commutation de l'utilisateur est le mode hybride, la commutation du mode de conduite (104) du véhicule selon le mode hybride.

6. Procédé de commande tout-terrain selon la revendication 1, dans lequel le procédé comprend en outre l'étape suivante :
(S601) lorsque le mode de conduite (104) du véhicule n'est pas modifié, la commutation du mode tout-terrain (102) dans lequel le véhicule se trouve sur la base d'une demande de commutation d'un utilisateur, dans lequel la demande de commutation de l'utilisateur est déclenchée en utilisant le commutateur du module ATS (100).

7. Procédé de commande tout-terrain selon la revendication 6, dans lequel l'étape (S601) consistant à, lorsque le mode de conduite (104) du véhicule n'est pas modifié, commuter le mode tout-terrain (102) dans lequel le véhicule se trouve sur la base de la demande de commutation de l'utilisateur comprend les étapes suivantes :
(S701) lorsque la demande de commutation de l'utilisateur est un autre mode, la commutation du mode tout-terrain (102) dans lequel le véhicule se trouve conformément à la demande de l'utilisateur et l'invitation à quitter un mode 4L d'un système à quatre roues motrices, dans lequel l'autre mode est un mode parmi les modes tout-terrain autre qu'un mode standard et qu'un mode économique ; et
(S702) lorsque la demande de commutation de l'utilisateur est le mode standard ou le mode économique, la commutation du mode tout-terrain (102) dans lequel le véhicule se trouve conformément à la demande de commutation de l'utilisateur.

8. Appareil de commande tout-terrain appliqué à un véhicule hybride-électrique équipé d'un module de système tout-terrain, ATS, (100), et l'appareil comprend :
un premier module de surveillance (108) configuré pour surveiller un mode tout-terrain (102) dans lequel le véhicule se trouve ;
un second module de surveillance (110) configuré pour surveiller un mode de conduite (104) du véhicule ;
un premier module de commande (112) configuré pour, lorsqu'il est constaté au cours de la surveillance que le mode tout-terrain (102) dans lequel le véhicule se trouve a été modifié, sur la base d'une relation de correspondance entre des modes tout-terrain et des modes de conduite, commander le mode de conduite (104) du véhicule en utilisant le mode tout-terrain modifié (102), dans lequel la modification du mode tout-terrain (102) dans lequel le véhicule se trouve est déclenchée en utilisant un commutateur du module ATS (100) ; et
un second module de commande (114) configuré pour, lorsqu'il est constaté au cours de la surveillance que le mode de conduite (104) du véhicule a été modifié, sur la base d'une relation de correspondance entre les modes de conduite et les modes tout-terrain, commander le mode tout-terrain (102) dans lequel le véhicule se trouve en utilisant le mode de conduite modifié (104), dans lequel la modification du mode de conduite (104) du véhicule est déclenchée en utilisant un commutateur d'un module de système d'unité principale, HUT, (106).

9. Véhicule qui est un véhicule hybride-électrique et qui comprend au moins un module de système tout-terrain, ATS, (100), un module de système d'unité principale, HUT, (106) et l'appareil de commande tout-terrain selon la revendication 8.

10. Programme informatique, comprenant un code lisible par ordinateur (1031 ; 1031'), et lorsque le code lisible par ordinateur (1031 ; 1031') est exécuté dans un dispositif informatique de calcul et de traitement, le code lisible par ordinateur force le dispositif informatique de calcul et de traitement à mettre en œuvre les étapes du procédé de commande tout-terrain selon l'une quelconque des revendications 1 à 7.

11. Support de stockage lisible, qui stocke un programme ou une instruction, et lorsque le programme ou l'instruction est exécuté(e) par un processeur, le programme informatique selon la revendication 10 est mis en œuvre.
